# EUROPEAN PATENT SPECIFICATION

(11) **EP 2 888 912 B1**
(45) Date of publication and mention of the grant of the patent: **22.11.2017**
(21) Application number: 12883189.8
(22) Date of filing: 23.08.2012
(51) Int. Cl.: H04W 52/18, H04W 52/14, H04W 52/24, H04W 52/34, H04W 52/38

(54) **LOW-POWER CARRIER TYPE AND RELATED METHODS AND APPARATUS**
KLEINLEISTUNGSTRÄGER UND ENTSPRECHENDE VERFAHREN SOWIE VORRICHTUNG
TYPE DE PORTEUSE BASSE PUISSANCE ET PROCÉDÉS ET APPAREIL CORRESPONDANTS

(43) Date of publication of application: 01.07.2015
(73) Proprietor: Avago Technologies General IP (Singapore) Pte. Ltd., Singapore 768923 (SG)
(72) Inventor: CHARBIT, Gilles, Farnborough Hampshire GU14 7BX (GB); ZENG, Erlin, Beijing 100096 (CN); WEI, Na, Beijing 100018 (CN)
(74) Representative: Jehle, Volker Armin
(86) International application number: PCT/CN2012/080505
(87) International publication number: WO 2014/029095

(56) References cited:
- WO-A1-2011/041700
- CN-A- 101 984 700
- CN-A- 102 404 808
- US-A1- 2012 201 159

## Description

### TECHNICAL FIELD:

The exemplary and non-limiting embodiments of this invention relate generally to wireless communication systems, methods, devices and computer programs, and more specifically relate to adjusting network transmit power in a heterogeneous network.

### BACKGROUND:

The Third Generation partnership Project 3GPP is working towards a Long Term Evolution LTE-Advanced system which is to introduce enhancements to carrier aggregation in LTE-Release 11. See for example document RP-1104551 by Nokia and Nokia Siemens Networks entitled LTE CA ENHANCEMENTS WID (3GPP TSG RAN Meeting #51; Kansas City, USA; 15-18 March 2011) and document R1-100809 by Huawei entitled CARRIER TYPES OFFLINE DISCUSSION (3GPP TSG RANI #59bis; Valencia, Spain; 18th - 22nd January 2010) which indicate that additional carrier types may have elements which are not backward compatible with earlier LTE carrier aggregation arrangements.

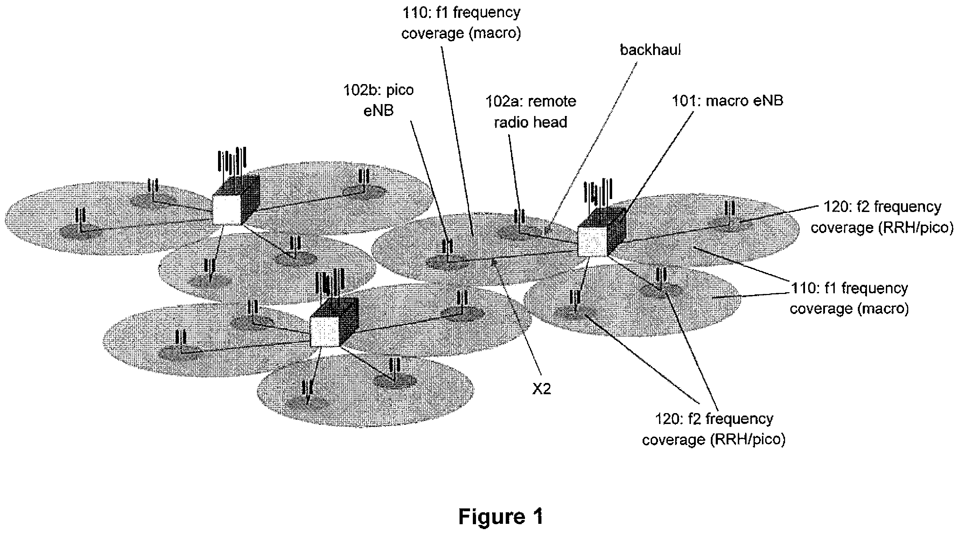

One radio environment of interest is shown at Figure 1, a heterogeneous network (HetNet) deployed together with carrier aggregation to cope with the large amount of traffic sometimes encountered in urban areas. Figure 1 assumes the LTE system so the network access nodes are referred to as eNodeBs or eNBs. The macro eNB 101 provides macro coverage on frequency f1 110 and a number of remote radio heads (RRHs) 102a are deployed on frequency f2 120 in areas of high traffic such as railway stations, airports, shopping malls, etc. Alternatively, dedicated pico eNBs 102b may be deployed in place of some or all of the remote radio heads to provide the hotspot coverage.

Frequency f1 is the primary component carrier (PCC) for a user equipment (UE) and is considered the "coverage" band, on which continuous service over a wide geographical area is provided on a backward compatible carrier. Mobility for the UEs would be based on this band and so the macro eNB 101 is sometimes referred to as the primary cell or PCell. Frequency f2 is the secondary component carrier (SCC) and is considered the "capacity" band which is used to improve throughput at hot spots and/or to provide further services beyond basic cellular coverage that may not be available on the PCC. Consequently the RRHs or pico eNBs 102a, 102b are referred to as secondary cells or SCells. In practice adjacent hotspots within the coverage area of a single PCC will use different frequencies for their respective SCCs to avoid interference. Any one or more of these SCCs may be the non-backward compatible Release-11 new carrier type. One area in which they may not be backward compatible is the downlink control channel; the new carriers may not utilize the Release-8 physical downlink control channel (PDCCH) and may not use common reference signals (CRSs). Whether implemented as RRHs or pico eNBs, the SCCs will be transmitting at a lower power than the macro eNB uses for the PCC.

Still unresolved for LTE-Advanced are interference co-ordination and capacity enhancements in the carrier aggregation based HetNet environment. One proposal in that regard is detailed at document R1-113289 by NTT DoCoMo entitled ON THE NEED FOR ADDITIONAL CARRIER TYPES IN REL-11 CA (3GPP TSG RAN WG1 Meeting #66bis; Zhuhai, China; 10-14 October 2011). This document considers component carrier (CC)#1 as the backward compatible PCC and CC#2 as the non-backward-compatible new carrier type in both the macro and small cells, and suggests that dynamic interference coordination between the macro eNodeB and the RRH is performed by dynamically controlling the resource allocation, and possibly the transmission power between the macro cell and small cells for the extension carrier. Such dynamic coordination becomes more effective by not transmitting the CRS. In this manner a UE that is compatible with Release-11 can enjoy carrier aggregation between the macro eNodeB and the RRH without suffering from interference from the CRS due to macro cell transmissions. To address the potential PDCCH shortage in the macro cell, this proposal also applies an enhanced PDCCH (ePDCCH) to the extension carrier.

On further analysis it appears that this proposed solution would make it difficult to achieve co-channel interference co-ordination from the macro cell to the RRH(s), due to relatively higher transmission power from the macro cell eNB.

US 2012/201159 A1 describes a base station including a radio communication unit, a resource adjustment unit, a resource division unit and a detection unit. The resource adjustment unit determines radio resources to be allocated to a downlink communication from a radio resource region shared with another base station. The resource division unit limits, to a first radio resource segment which is a part of the radio resource region, radio resources in response to estimating that communication quality of the downlink communication using the limited first radio resource segment is improved over the communication quality of the first downlink communication when using the entire range of the radio resource region that is shared with the other base station. The detection unit detects execution of resource division by the other base station for limiting radio resources used for another downlink communication between the other base station and a mobile station to a second radio resource segment.

In a first aspect of the invention there is a method for operating a first network access node, comprising: receiving, from user equipments on a first component carrier, measurement reports of downlink conditions on a second component carrier and measurement reports of downlink conditions on a third component carrier; based on the received measurement reports, configuring a second network access node to decrease its transmit power on the second component carrier and a third network access node to increase its transmit power on the third component carrier.

In a second aspect of the invention there is an apparatus for controlling a first network access node comprising at least one processor and a memory storing a set of computer instructions. The at least one processor is arranged with the memory storing the instructions to cause the first network access node at least to: based on measurement reports received from user equipments on a first component carrier of downlink conditions on a second component carrier and of downlink conditions on a third component carrier, configure a second network access node to decrease its transmit power on the second component carrier and a third network access node to increase its transmit power on the third component carrier.

In a third aspect of the invention there is a computer readable memory storing a set of instructions which, when executed on a first network access node causes the first network access node to at least: based on measurement reports received from user equipments on a first component carrier of downlink conditions on a second component carrier and of downlink conditions on a third component carrier, configure a second network access node to decrease its transmit power on the second component carrier and a third network access node to increase its transmit power on the third component carrier.

### BRIEF DESCRIPTION OF THE DRAWINGS:

Figure 1 is a prior art schematic diagram illustrating a heterogeneous network with carrier aggregation showing hotspot coverage areas within larger macro cell coverage areas, and illustrates an example environment in which some embodiments of these teachings may be practiced to advantage.
Figure 2 is a schematic diagram illustrating a portion of the HetNet radio environment from Figure 1 which is adapted according to an example embodiment of these teachings to alter the coverage areas of eNBs 24 and 26.
Figure 3 is a logic flow diagram that illustrates, from the perspective of the first/macro network access node, the operation of a method, and a result of execution of computer program instructions embodied on a computer readable memory, in accordance with the exemplary embodiments of this invention.
Figure 4 is a non-limiting example of a simplified block diagram of the relevant network nodes shown at Figure 2 and also one UE, which are exemplary electronic devices suitable for use in practicing the exemplary embodiments of this invention.

### DETAILED DESCRIPTION:

While the examples below are in the context of the LTE (or LTE-Advanced) system with a UE operating in a carrier aggregation deployment of a HetNet, these are non-limiting examples only. The specific examples used in these teachings are readily extendable for other radio access technologies (RATs) such as universal terrestrial radio access network (UTRAN) and universal mobile telecommunications system (UMTS), whether or not those other RATs are deployed with carrier aggregation for hotspot coverage.

To overcome the difficulties with the interference solution proposed in document R1-113289 and summarized in the background section above, the examples below narrow the inter-band carrier aggregation-based HetNet scenario to PCC as the backward compatible carrier CC #1 on the macro cell for coverage, and non-backward new carrier type CC#2 on the RRH cells. The existence of a backhaul link between the macro cell eNB 101 and the RRHs 102a, 102b is assumed, as is the ability of the UE's synchronization algorithms to cope with a relative propagation delay difference of up to 31.3 µ s (i.e. 1.3 µs timing offset due to base station time alignment and 30 µs additional propagation delay difference due to the macro eNB and RRHs being not co-located as outlined in document R2-113389 by NTT DoCoMo entitled CHANGE REQUEST 36.300 CR 0369 (3GPP TSG-RAN WG2 Meeting#74; Barcelona, Spain; 9-13 May 2011) among the component carriers to be aggregated in inter-band non-contiguous carrier aggregation.

Even with the above simplifying assumptions, it is not clear how dynamic interference coordination between the RRHs can be performed by dynamically controlling the resource allocation on the backward-compatible PCC (macro-cell) and the SCCs (RRHs), and possibly the transmission power between the non-backward compatible SCCs (RRHs), as document R1-113289 proposes.

Exemplary embodiments of these teachings address the interference issue in a HetNet by co-ordinating the shrinking the coverage of SCell#1 while expanding the coverage of SCell#2 so as to increase total capacity by serving more UEs without inter-SCell downlink interference. These examples also reduce need to schedule these UEs on the PCell by avoiding coverage holes on the SCells.

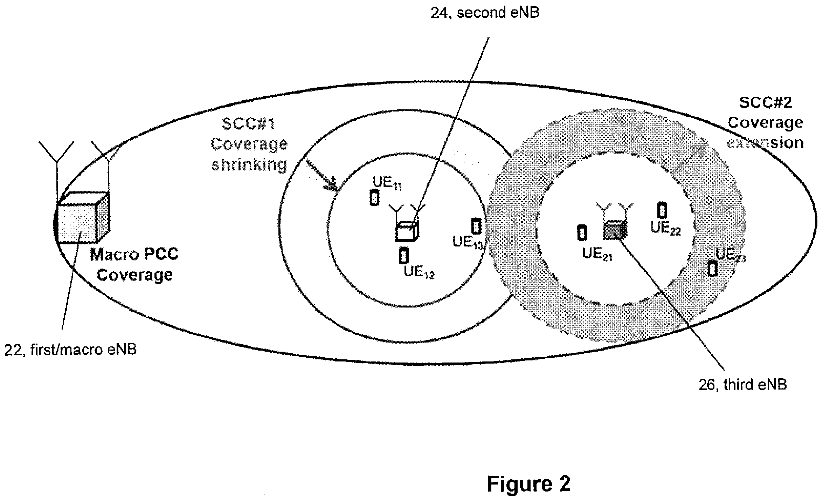

Figure 2 illustrates an example. There are illustrated six UEs, all of which are on the PCC with the macro eNB 22. There are two SCells under this same macro eNB 22; UE₁₁, UE₁₂, UE₁₃ are in communication with one of them (eNB 24, which may be implemented as a RRH or as a pico eNB) on one SCC#1 and UE₂₁, UE₂₂ are in communication with the other (eNB 26, which also may be implemented as a RRH or a pico eNB) on another SCC#2. There is further a cell-edge UE₂₃ which initially is not under coverage of eNB 26 on the other SCC. In this example the end result is that eNB 24 shrinks its SCC#1 coverage area as shown by the arrow by reducing its transmission power on SCC#1 to a level which is still sufficient to provide coverage to UE₁₁, UE₁₂ and DE₁₃ which are located mid-cell. This allows eNB 26 to expand its SCC#2 coverage area, as shown by the arrow at its dashed-line coverage area boundaries, by increasing its transmission power on SCC#2 to provide coverage to mid-cell UE₂₁, UE₂₂ as before and also to now provide coverage to cell-edge UE₂₃, and still without interfering with SCC#1.

It is preferred but not essential that the macro eNB 22 provide its coverage to the UEs on the PCC, but in fact the signaling in the examples below can be over some other SCC with which the macro eNB 22 has coverage with all the relevant UEs. In order to simplify terminology, the macro eNB 22 and the PCC shown at Figure 2 will be referred to as a first eNB (or more generically a first network access node) and a first component carrier; eNB 24 and the SCC#1 shown at Figure 2 will be a second eNB (or more generically a second network access node) and a second component carrier; and eNB 26 and the SCC#2 shown at Figure 2 will be a third eNB (or more generically a third network access node) and a third component carrier. The second and third component carriers are low power as compared to the first component carrier, regardless of whether the first component carrier is the PCC or some further SCC.

The second and third component carriers are assumed to be at the same frequency and so interfere with each other where their coverage overlaps at the relevant UEs. In another example, the second and third component carrier may be at separate frequencies which are not assumed to always have sufficient frequency separation and so tend to interfere with one another where their coverages overlap at the relevant UEs. Being component carriers they may each represent multiple logical and physical channels, so the interference may arise from some but not all channels of the different component carriers at the same frequency, or insufficient guard band spacing between frequency-adjacent channels of the different component carriers at different frequencies, or some more comprehensive overlap of multiple channels.

The coordinated coverage of the different second and third component carriers used by the RRHs/pico eNBs 24, 26 is configured by the first component carrier used by the first/macro eNB 22. The power changes signaled on the first component carrier are applied to at least the data channels on the second and third component carriers. In some embodiments these power changes are applied to all channels of the respective second/third component carrier, but it may be that in Release 11 there will be sufficient time separation, sequence separation, or frequency separation among the control channels of the hotspot carriers and so the interference is only on the data channels.

In order to shrink and extend the coverage by the second and third component carriers, first the UEs measure interference and path loss on their respective serving second/third component carrier. More generally the UEs send a measurement report of the downlink conditions they see on their respective serving second/third component carrier, and they send these measurement reports to the first/macro eNB on the first component carrier which in typical deployments would be the PCC.

The first/macro eNB 22 then configures two power adjustment parameters for each of the component carriers it will be adjusting (in this example the second and third component carriers): a cell-specific transmission power offset (CTPO); and a cell-specific transmission power offset schedule (CTPOS).

The first/macro eNB 22 indicates the CTPO and CTPOS to the UEs that are in coverage of the component carriers being adjusted, in order to avoid a sudden drop or increase of transmit power which would create problems for the UEs in their radio resource management (RRM) measurements, synchronization tracking, and demodulation for example.

The first/macro eNB 22 indicates the relevant CTPO and CTPOS parameter pair to the respective serving UEs on the first component carrier. For those UEs which are in a connected state on the first component carrier with the first/macro eNB 22 this can be done by including the CTPO and CTPOS parameters in a paging message sent to them in the common UE search space. For those UEs which are camping on the first component carrier in an idle state the first/macro eNB 22 can similarly include the CTPO and CTPOS parameters in a paging message sent to them once they wake up from their discontinuous reception (DRX) sleep mode. Or the first/macro eNB can send the relevant CTPO and CTPOS parameter pair to connected-state UEs via dedicated signaling.

The second and third eNBs 24, 26 under the control of the first/macro eNB 22 will decrease or increase their transmission power on their respective second/third component carrier to shrink or extend their SCell coverage according to their respectively configured CTPO and CTPOS parameters. In the example of Figure 2 the first/macro eNB 22 and the second/third eNBs 24, 26 are not co-located, so in an embodiment the first/macro eNB 22 sends these parameters to the eNBs 24, 26 over a backhaul connection for the case in which these eNBs 24, 26 are embodied as RRHs. This backhaul connection may be a wired backhaul (including optical) or a wireless backhaul link. In case the second and third eNBs 24,26 are embodied as pico eNBs the coordination by the first/macro eNB 22 could be done over the X2 interface, but this may impose an additional time delay due to the latency on the X2 interface which the first/macro eNB 22 can account for in its CTPOSs which gives the time at which the transmit power increase and decrease are to take effect. Since one of the second and third eNBs 24, 26 may be a RRH and the other a pico eNB, the first/macro eNB 22 can use both backhaul and X2 to communicate the power adjustment parameters and since it controls the schedule via the CTPOSs it can adjust for any latency disparity between these different signaling pathways. The backhaul link and X2 interface are shown at Figure 1.

It is helpful if the first/macro eNB 22 received some feedback of the effects of the SCell power adjustments it commanded. In order to avoid taking unnecessary measurements, in one embodiment of these teachings the UE will only measure its SCell when triggered by the eNB and will report the measurements to the eNB based on a new E-UTRA measurement reporting event. Thus the new measurements are triggered aperiodically, such as by the first/macro eNB's request for a new measurement report of the SCells whose power has been adjusted.

The CTPO schedule configured for the UE on the PCell needs to be aligned with the RRM measurement configuration via dedicated signalling by the UE on SCCs. This can be readily done as the RRM measurements by the UE on the SCells are also configured for the UE on the PCell. This avoids bias in the UE's RRM measurements if there is a significant change to the common reference signal (CRS) power (or channel state information reference signal CSI-RS power in case no CRS is scheduled on this new carrier type) during an RRM measuring period, which could lead to wrong handover of cell reselection. One way to implement this is for the UE to reset its channel estimation algorithm across the subframes that lie at the boundaries when the cell transmit power is changed according to the CTPO parameter. A similar use for the channel estimation algorithm has been shown to be practical for multi-media broadcast over single frequency network (MBSFN) subframes and in time division duplex (TDD) LTE, with limited impact on UE implementation and receiver performance.

In an embodiment the first/macro eNB 22 configures the CPTO/CTPOS parameter pair and then sends a measurement report request after the transmit power has been changed. This request can be sent to the connected-state UEs via dedicated signalling on the first component carrier, and the first/macro eNB 22 should give the requested UEs enough time to make these new measurements on their respective SCC and report them before the first/macro eNB 22 changes the CPTO/CTPOS parameters again.

In one specific embodiment the first/macro eNB 22 triggers these new measurements by sending an E-UTRA measurement object (MeasObjectEUTRA) information element that contains the physical cell identities (PCI) of the SCell to be measured by the UE, and also an E-UTRA report configuration (ReportConfigEUTRA) information element that includes a new E-UTRA measurement reporting event. Such a new reporting event may for example be labelled A₇. These information elements force the UE to take measurements on the SCells whose PCIs are on the list.

From these new measurement reports it receives the first/macro eNB 22 can decide whether the downlink transmission power on some SCC#i needs to be increased or decreased to expand or shrink the coverage on SCell#i, taking into account the connected UEs that are in SCell#/. This is different from other E-UTRA measurement reporting events which essentially gives conditions for a UE to report its measurements, for example when the reference signal received power or quality (RSRP / RSRQ) on serving and neighbour cells meet some threshold or one exceeds the other.

It will be appreciated from the above that the low-power new carrier type will enable improved network efficiency. This is because the SCells may transmit at a lower power than that available in its eNB power class, based on UE interference and the UE's path loss measurements. SCell power savings are realized by setting the transmission power to a level sufficient to provide coverage to the UEs in the respective SCell, such as is shown at Figure 2 where the transmit power of eNB 24 is decreased in view of there being only mid-cell UEs in the attached mode. In any event the PCell can provide fall-back coverage for all the UEs that are out of coverage of the SCCs.

If the first/macro eNB 22 decides to change the size of a given SCell, it will send the CTPO and CTPOS parameters to the UE as detailed above. For the case in which the new carrier type does use common reference signals, the first/macro eNB 22 may indicate the reference signal power via dedicated signaling in a *PDSCH-Config* information element. This allows the UEs to demodulate the physical downlink shared channel (PDSCH) with 16QAM and 64QAM in case the PDSCH energy per resource element (EPRE) is different from the CRS EPRE, while minimizing the implementation of these teachings for the UEs. For the case in which the PSDSCH (or other control channels) is modulated with QPSK, the ratio information is not needed by the demodulator. The UE can measure path loss based on the CRS, and then know the power of the PDSCH based on the reference signal power. In this manner the downlink power for the PDSCH is determined at the UE in a similar way as in conventional LTE; namely that the PDSCH resource element power is the CRS power plus an offset.

Further for the low-power new carrier type, by these teachings the SCC coverage is shrinking or expanding due to actual change in the cell's transmission power. This semi-statically provides to low-mobility UEs in a connected mode that have the SCCs configured and activated an added data capacity. The configuration of an SCC within a pre-configured SCC set for a UE by the first/macro eNB 22 on the PCC may simplify UE measurements on SCCs. Coordination of SCC coverage via the PCC avoids coverage holes and allows more energy efficient operations.

Further optimisation may be gained in the case where there is a high density of RRHs/pico eNBs by combining these power adjustment teachings with enhanced inter-cell interference coordination (e-ICIC) from LTE Release 10 (or with single frequency reuse ICIC from Release 8) in a HetNet. Additionally, a larger physical extension range is possible by increasing a cell's transmit power rather than using some (artificial) cell-specific offset like that used in the Release 8 cell range expansion ICIC which "tricks" the UE into selecting a new cell.

One technical advantage of these teachings is that they enable a low power new carrier type that extends the downlink power control for SCCs for network energy efficiency. The downlink SCC power saving can be made with decreased SCC coverage due to downlink SCC power control (i.e. lower the downlink SCC power level) if not needed by the UEs in attached mode. The downlink PCC which does not use the downlink power control can provide fall-back coverage for all the UEs that are out of coverage of the SCCs. Additionally, another technical advantage is in extending the range of the SCell while minimizing downlink interference to a neighbour SCell by matching cell coverage to the respectively attached UEs based on their reported interference and path loss measurements. This improves the downlink interference mitigation for the UEs on semi-static basis.

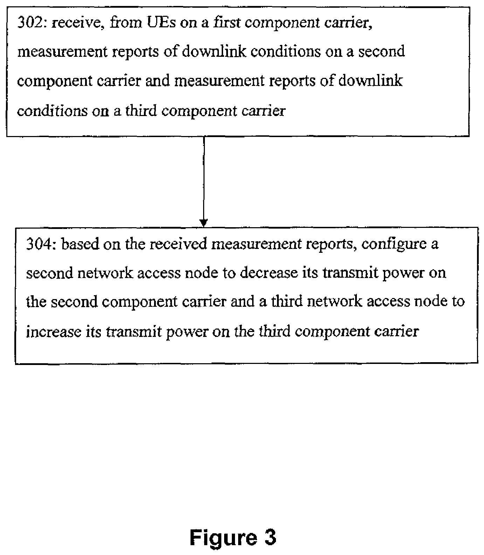

Figure 3 is a logic flow diagram that summarize some example embodiments of the invention. Figure 3 describes from the perspective of the first/macro eNB 22, and may be considered to illustrate the operation of a method, and a result of execution of a computer program stored in a computer readable memory, and a specific manner in which components of an electronic device are configured to cause that eNB 22 to operate. In this regard the process flow of Figure 3 may describe operation of the whole eNB or of certain components thereof such as a modem, chipset, or the like.

Such blocks and the functions they represent are non-limiting examples, and may be practiced in various components such as integrated circuit chips and modules, and that the exemplary embodiments of this invention may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

Such circuit/circuitry embodiments include any of the following: (a) hardware-only circuit implementations (such as implementations in only analog and/or digital circuitry) and (b) combinations of circuits and software (and/or firmware), such as: (i) a combination ofprocessor(s) or (ii) portions ofprocessor(s)/software (including digital signal processor(s)), software, and memory(ies) that work together to cause an apparatus, such as an eNB or other network access node, to perform the various functions summarized at Figure 3 and (c) circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" also covers, for example, a baseband integrated circuit or applications processor integrated circuit for a network access node or a similar integrated circuit in another network device.

At block 302 of Figure 3 the first/macro network access node receives, from user equipments on a first component carrier, measurement reports of downlink conditions on a second component carrier and measurement reports of downlink conditions on a third component carrier. Then at block 304, based on the received measurement reports, the first network access node configures a second network access node to decrease its transmit power on the second component carrier and further configures a third network access node to increase its transmit power on the third component carrier.

In the non-limiting examples above the first network access node is a macro eNodeB and the first component carrier is a primary component carrier PCC; the second network access node is under control of the macro eNodeB and the second component carrier is a secondary component carrier SCC; and the third network access node is under control of the macro eNodeB and the third component carrier is a different secondary component carrier SCC.

In another non-limiting embodiment the first network access node further sends to the user equipments on the first component carrier a) indications of the transmit power decrease on the second component carrier and of the transmit power increase on the third component carrier; and b) at least one schedule for when the transmit power decrease and increase are to take effect. For example, the indications may comprise a cell-specific power offset for each of the second and third network access nodes, and the at least one schedule may comprise a cell-specific power offset schedule for each of the second and third network access nodes. These indications and the at least one schedule may be sent to the user equipments in dedicated signaling on the first component carrier, or via paging on the first component carrier.

In a further example embodiment the first network access node also uses the first component carrier to trigger the user equipments for new measurement reports of downlink conditions on the second component carrier after the transmit power decrease, and for new measurement reports of downlink conditions on the third component carrier after the transmit power increase.

In the more detailed examples above, the configuring of block 304 is implemented by sending to the second network access node the indication of the transmit power decrease and the schedule for when the transmit power decrease is to take effect; and sending to the third network access node the indication of the transmit power increase and the schedule for when the transmit power increase is to take effect. It was further detailed above that the schedule sent to the second network access node is aligned to a RRM configuration for the second component carrier, and the schedule sent to the third network access node is aligned to a RRM configuration for the third component carrier. In this case the transmit power decrease and increase may take effect simultaneously

And in another example embodiment the indication and the schedule is sent on a backhaul link for the case in which either or both of the second and third network access nodes are remote radio heads; and/or the indication and the schedule is sent on an X2 interface for the case in which either or both of the second and third network access nodes are pico eNodeBs.

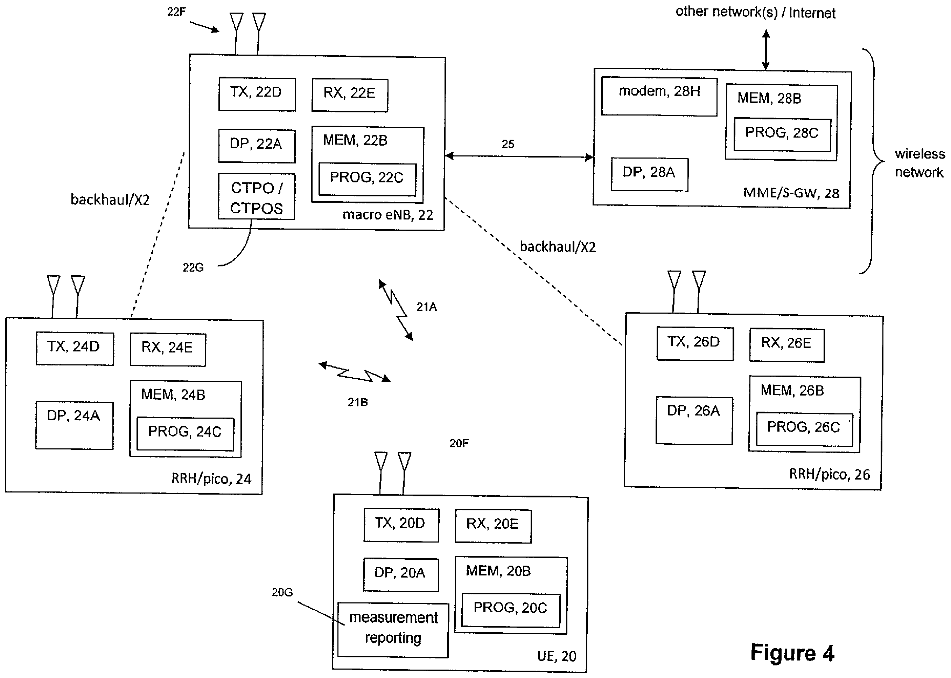

Reference is now made to Figure 4 for illustrating a simplified block diagram of various electronic devices and apparatus that are suitable for use in practicing the exemplary embodiments of this invention. In Figure 4 a wireless network (eNB 22 and mobility management entity MME and/or serving gateway S-GW 28) is adapted for communication over a wireless link 21A with an apparatus, such as a mobile terminal or UE 20, on a first component carrier via a first network access node such as a base station/macro eNB 22. The network may include the MME/S-GW 28 which provides connectivity with further networks (e.g., a publicly switched telephone network PSTN and/or a data communications network/Internet). In the case of a HetNet the network additionally includes the other eNBs 24, 26, either of which may be implemented as a RRH or pico eNB. Only one UE 20 is shown but in many deployments there will be one or more under each of the other eNBs 24, 26.

The UE 20 includes processing means such as at least one data processor (DP) 20A, storing means such as at least one computer-readable memory (MEM) 20B storing at least one computer program (PROG) 20C, communicating means such as a transmitter TX 20D and a receiver RX 20E for bidirectional wireless communications with the network access node 22 via one or more antennas 20F. Also stored in the MEM 20B at reference number 20G are the UE's rules for reporting to the first eNB 22 on the first component carrier the downlink interference and path loss it sees on the SCell with the second eNB 24 as is detailed above with specificity.

The first network access node 22 is in the position of the first/macro eNB, and also includes processing means such as at least one data processor (DP) 22A, storing means such as at least one computer-readable memory (MEM) 22B storing at least one computer program (PROG) 22C, and communicating means such as a transmitter TX 22D and a receiver RX 22E for bidirectional wireless communications with the UE 20 via one or more antennas 22F. The access node 22 also includes at unit 22G its logic for deriving the CTPO and its schedule CTPOS and for communicating these parameters to the UE 20 and to the other eNBs 24, 26. There is also a data and/or control path 25 coupling the first eNB 22 with the MME/S-GW 28, and another data and/or control path shown as backhaul/X2 coupling the eNB 22 to the second and third eNBs 24, 26. The UE 20 has a wireless link 21B with the second eNB 24 for taking measurements thereof, including interference and path loss.

For completeness the second eNB 24 and the third eNB 26 are also each illustrated as having a data processor (DP) 24A/26A; storing means / computer-readable memory (MEM) 24B/26B storing at least one computer program (PROG) 24C/26C; and communicating means such as a transmitter TX 24D/26D and a receiver RX 24E/26E for bidirectional wireless communications with their respectively attached UE(s) via one or more antennas.

Similarly, the MME/S-GW 28 includes processing means such as at least one data processor (DP) 28A, storing means such as at least one computer-readable memory (MEM) 28B storing at least one computer program (PROG) 28C, and communicating means such as a modem 28H for bidirectional communications with the first eNB 22 via the data/control path 25. While not particularly illustrated for the UE 20 or eNBs 22, 24, 26, those devices are also assumed to include as part of their wireless communicating means a modem which may be inbuilt on an RF front end chip within those devices 20, 22, 24, 26 and which also carries the TX 20D/22D/24D/26D and the RX 20E/22E/24E/26E.

At least one of the PROGs 22C/22G in the first access node/macro eNB 22 is assumed to include program instructions that, when executed by the associated DP 22A, enable the device to operate in accordance with the exemplary embodiments of this invention, as detailed above. The UE 20 (and the other eNBs 24, 26) may also have software stored in their respective MEMs to implement certain aspects of these teachings as detailed above. In this regard the exemplary embodiments of this invention may be implemented at least in part by computer software stored on the MEM 20B/22B/24B/26B which is executable by the DP 20A of the UE 20 and/or by the DP 22A/24A/26A of the access node(s) 22, 24, 26, or by hardware, or by a combination of tangibly stored software and hardware (and tangibly stored firmware). Electronic devices implementing these aspects of the invention need not be the entire UE 20 or macro eNB 22 (or other eNBs 24, 26), but exemplary embodiments may be implemented by one or more components of same such as the above described tangibly stored software, hardware, firmware and DP, modem, system on a chip SOC or an application specific integrated circuit ASIC.

In general, the various embodiments of the UE 20 can include, but are not limited to personal portable digital devices having wireless communication capabilities, of which non-limiting examples include cellular telephones/mobile terminals, navigation devices, laptop/palmtop/tablet computers, digital cameras and Internet appliances.

Various embodiments of the computer readable MEMs 20B, 22B, 24B and 26B include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DPs 20A, 22A, 24A and 26A include but are not limited to general purpose computers, special purpose computers, microprocessors, digital signal processors (DSPs) and multi-core processors.

Some of the various features of the above non-limiting embodiments may be used to advantage without the corresponding use of other described features. The foregoing description should therefore be considered as merely illustrative of the principles, teachings and exemplary embodiments of this invention, and not in limitation thereof.

## Claims

1. A method for operating a first network access node, comprising:
receiving (302), from user equipments on a first component carrier, measurement reports of downlink conditions on a second component carrier and measurement reports of downlink conditions on a third component carrier;
based on the received measurement reports, configuring (304) a second network access node to decrease its transmit power on the second component carrier and a third network access node to increase its transmit power on the third component carrier.

2. The method according to claim 1, wherein:
the first network access node is a macro eNodeB (22, 24, 26) and the first component carrier is a primary component carrier PCC;
the second network access node is under control of the macro eNodeB (22, 24, 26) and the second component carrier is a secondary component carrier SCC; and
the third network access node is under control of the macro eNodeB (22, 24, 26) and the third component carrier is a different secondary component carrier SCC.

3. The method according to claims 1 or 2, the method further comprising the first network access node sending to the user equipments on the first component carrier: indications of the transmit power decrease on the second component carrier and of the transmit power increase on the third component carrier; and
at least one schedule for when the transmit power decrease and increase are to take effect.

4. The method according to claim 3, wherein the indications comprise a cell-specific power offset for each of the second and third network access node, and the at least one schedule comprises a cell-specific power offset schedule for each of the second and third network access nodes.

5. The method according to claims 3 or 4, wherein the indications and the at least one schedule are sent to the user equipments in dedicated signaling on the first component carrier or via paging on the first component carrier.

6. The method according to any of claims 3 through 5, the method further comprising;
the first network access node using the first component carrier to trigger the user equipments for new measurement reports of downlink conditions on the second component carrier after the transmit power decrease, and new measurement reports of downlink conditions on the third component carrier after the transmit power increase.

7. The method according to any of claims 3 through 6, wherein configuring the second and the third network access node comprises:
sending to the second network access node the indication of the transmit power decrease and the schedule for when the transmit power decrease is to take effect; and sending to the third network access node the indication of the transmit power increase and the schedule for when the transmit power increase is to take effect.

8. The method according to claim 7, wherein the schedule sent to the second network access node is aligned to a radio resource measurement configuration for the second component carrier, and the schedule sent to the third network access node is aligned to a radio resource measurement configuration for the third component carrier.

9. The method according to claim 8, wherein the transmit power decrease and increase are to take effect simultaneously.

10. The method according to any of claims 7 through 9, wherein:
the indication and the schedule are sent on a backhaul link for the case in which either or both of the second and third network access nodes are remote radio heads; and/or
the indication and the schedule are sent on an X2 interface for the case in which either or both of the second and third network access nodes are pico eNodeBs.

11. An apparatus for controlling a first network access node (22, 24, 26), comprising at least one processor; and
a memory storing a set of computer instructions,
wherein the at least one processor is arranged with the memory storing the instructions to cause the first network access node at least to:
based on measurement reports (302) received from user equipments on a first component carrier of downlink conditions on a second component carrier and of downlink conditions on a third component carrier, configure (304) a second network access node to decrease its transmit power on the second component carrier and a third network access node to increase its transmit power on the third component carrier.

12. The apparatus according to claim 11, wherein:
the apparatus is the first network access node which is a macro eNodeB (22, 24, 26) and the first component carrier is a primary component carrier PCC;
the second network access node is under control of the macro eNodeB (22, 24, 26) and the second component carrier is a secondary component carrier SCC; and
the third network access node is under control of the macro eNodeB (22, 24, 26) and the third component carrier is a different secondary component carrier SCC.

13. The apparatus according to claims 11 or 12, wherein the at least one processor is arranged with the memory storing the instructions to cause the first network access node further to send to the user equipments on the first component carrier:
indications of the transmit power decrease on the second component carrier and of the transmit power increase on the third component carrier; and
at least one schedule for when the transmit power decrease and increase are to take effect.

14. A computer readable memory storing a set of instructions which, when executed on a first network access node, causes the first network access node to at least: based on measurement reports received from user equipments on a first component carrier of downlink conditions on a second component carrier and of downlink conditions on a third component carrier, configure a second network access node to decrease its transmit power on the second component carrier and a third network access node to increase its transmit power on the third component carrier.

## Patentansprüche

1. Verfahren zum Betreiben eines ersten Netzwerkzugangsknotens, das umfasst:
Empfangen (302), von User Equipments auf einem ersten Komponententräger, von Messberichten von Downlink-Bedingungen auf einem zweiten Komponententräger und Messberichten von Downlink-Bedingungen auf einem dritten Komponententräger;
basierend auf den empfangenen Messberichten, Konfigurieren (304) eines zweiten Netzwerkzugangsknotens, um seine Sendeleistung auf dem zweiten Komponententräger zu verringern, und eines dritten Netzwerkzugangsknotens, um seine Sendeleistung auf dem dritten Komponententräger zu steigern.

2. Verfahren nach Anspruch 1, wobei:
der erste Netzwerkzugangsknoten ein Makro-eNodeB (22, 24, 26) und der erste Komponententräger ein primärer Komponententräger ist;
der zweite Netzwerkzugangsknoten von dem Makro-eNodeB (22, 24, 26) gesteuert wird und der zweite Komponententräger ein sekundärer Komponententräger ist; und
der dritte Netzwerkzugangsknoten von dem Makro-eNodeB (22, 24, 26) gesteuert wird und der dritte Komponententräger ein anderer sekundärer Komponententräger ist.

3. Verfahren nach Anspruch 1 oder 2, wobei das Verfahren des Weiteren umfasst, dass der erste Netzwerkzugangsknoten auf dem ersten Komponententräger an die User Equipments sendet: Angaben über die Sendeleistungsverringerung auf dem zweiten Komponententräger und über die Sendeleistungssteigerung auf dem dritten Komponententräger;
und
wenigstens einen Zeitplan darüber, wann die Sendeleistungsverringerung und die Sendeleistungssteigerung stattfinden sollen.

4. Verfahren nach Anspruch 3, wobei die Angaben einen zellenspezifischen Leistungs-Offset für jeden des zweiten und dritten Netzwerkzugangsknotens aufweisen, und wobei der wenigstens eine Zeitplan einen zellenspezifischen Leistungs-Offset-Zeitplan für jeden des zweiten und dritten Netzwerkzugangsknotens aufweist.

5. Verfahren nach Anspruch 3 oder 4, wobei die Angaben und der wenigstens eine Zeitplan an die User Equipments in dedizierter Signalisierung auf dem ersten Komponententräger oder über Paging auf dem ersten Komponententräger gesendet werden.

6. Verfahren nach einem der Ansprüche 3 bis 5, wobei das Verfahren des Weiteren umfasst, dass der erste Netzwerkzugangsknoten den ersten Komponententräger verwendet, um die User Equipments für neue Messberichte von Downlink-Bedingungen auf dem zweiten Komponententräger nach der Sendeleistungsverringerung anzusteuern, und für neue Messberichte von Downlink-Bedingungen auf dem dritten Komponententräger nach der Sendeleistungssteigerung.

7. Verfahren nach einem der Ansprüche 3 bis 6, wobei das Konfigurieren des zweiten und des dritten Netzwerkzugangsknotens umfasst:
Senden der Angabe über die Sendeleistungsverringerung und des Zeitplans, wann die Sendeleistungsverringerung stattfinden soll, an den zweiten Netzwerkzugangsknoten; und Senden der Angabe über die Sendeleistungssteigerung und des Zeitplans, wann die Sendeleistungssteigerung stattfinden soll, an den dritten Netzwerkzugangsknoten.

8. Verfahren nach Anspruch 7, wobei der an den zweiten Netzwerkzugangsknoten gesendete Zeitplan an eine Funkressourcen-Messkonfiguration für den zweiten Komponententräger angepasst ist, und der an den dritten Netzwerkzugangsknoten gesendete Zeitplan an eine Funkressourcen-Messkonfiguration für den dritten Komponententräger angepasst ist.

9. Verfahren nach Anspruch 8, wobei die Sendeleistungsverringerung und -steigerung gleichzeitig wirksam werden sollen.

10. Verfahren nach einem der Ansprüche 7 bis 9, wobei:
die Angabe und der Zeitplan auf einer Backhaul-Verbindung gesendet werden, wenn einer oder beide des zweiten und des dritten Netzwerkverbindungsknotens Remote Radio Heads sind; und/oder
die Angabe und der Zeitplan auf einer X2-Schnittstelle gesendet werden, wenn einer oder beide des zweiten und dritten Netzwerkzugangsknotens Pico-eNodeBs sind.

11. Vorrichtung zum Steuern eines ersten Netzwerkzugangsknotens (22, 24, 26), die wenigstens einen Prozessor und einen Speicher aufweist, der einen Satz von Computerbefehlen speichert, wobei der wenigstens eine Prozessor mit dem Speicher, der die Befehle speichert, ausgelegt ist, den ersten Netzwerkzugangsknoten zu veranlassen wenigstens zum:
Konfigurieren (304), basierend auf Messberichten (302) über Downlink-Bedingungen auf einem zweiten Komponententräger und über Downlink-Bedingungen auf einem dritten Komponententräger, die von User Equipments auf einem ersten Komponententräger empfangen werden, eines zweiten Netzwerkzugangsknotens, um seine Sendeleistung auf dem zweiten Komponententräger zu verringern, und eines dritten Netzwerkzugangsknotens, um seine Sendeleistung auf dem dritten Komponententräger zu steigern.

12. Vorrichtung nach Anspruch 11, wobei:
die Vorrichtung der erste Netzwerkzugangsknoten ist, der ein MacroeNodeB (22, 24, 26) ist, und der erste Komponententräger ein primärer Komponententräger ist;
der zweite Netzwerkzugangsknoten von dem Makro-eNodeB (22, 24, 26) gesteuert wird und der zweite Komponententräger ein sekundärer Komponententräger ist; und
der dritte Netzwerkzugangsknoten von dem Makro-eNodeB (22, 24, 26) gesteuert wird und der dritte Komponententräger ein anderer sekundärer Komponententräger ist.

13. Vorrichtung nach Anspruch 11 oder 12, wobei der wenigstens eine Prozessor mit dem Speicher, der die Befehle speichert, dazu ausgelegt ist zu veranlassen, dass der erste Netzwerkzugangsknoten des Weiteren auf dem ersten Komponententräger an die User Equipments sendet:
Angaben über die Sendeleistungsverringerung auf dem zweiten Komponententräger und über die Sendeleistungssteigerung auf dem dritten Komponententräger; und
wenigstens einen Zeitplan darüber, wann die Sendeleistungsverringerung und die Sendeleistungssteigerung stattfinden sollen.

14. Computerlesbarer Speicher, der einen Satz von Befehlen speichert, welche, wenn sie auf einem ersten Netzwerkzugangsknoten ausgeführt werden, den ersten Netzwerkzugangsknoten wenigstens veranlassen zum:
Konfigurieren, basierend auf Messberichten über Downlink-Bedingungen auf einem zweiten Komponententräger und über Downlink-Bedingungen auf einem dritten Komponententräger, die von User Equipments auf einem ersten Komponententräger empfangen werden, eines zweiten Netzwerkzugangsknotens, um seine Sendeleistung auf dem zweiten Komponententräger zu verringern, und eines dritten Netzwerkzugangsknotens, um seine Sendeleistung auf dem dritten Komponententräger zu steigern.

## Revendications

1. Procédé de fonctionnement d'un premier noeud d'accès au réseau, comprenant les étapes consistant à :
recevoir (302), en provenance d'équipements utilisateurs sur une première porteuse de composants, des rapports de mesure de conditions en liaison descendante sur une deuxième porteuse de composants et des rapports de mesure de conditions en liaison descendante sur une troisième porteuse de composants ;
sur la base des rapports de mesure reçus, configurer (304) un deuxième noeud d'accès au réseau pour diminuer sa puissance de transmission sur la deuxième porteuse de composants et un troisième noeud d'accès au réseau pour augmenter sa puissance de transmission sur la troisième porteuse de composants.

2. Procédé selon la revendication 1, dans lequel :
le premier noeud d'accès au réseau est un macro noeud B électronique (22, 24, 26) et la première porteuse de composants est une porteuse de composants primaire PCC ;
le deuxième noeud d'accès au réseau est sous contrôle du macro noeud B électronique (22, 24, 26) et la deuxième porteuse de composants est une porteuse de composants secondaire SCC ; et
le troisième noeud d'accès au réseau est sous contrôle du macro noeud B électronique (22, 24, 26) et la troisième porteuse de composants est une porteuse de composants secondaire SCC différente.

3. Procédé selon la revendication 1 ou 2, le procédé comprenant en outre le premier noeud d'accès au réseau qui envoie aux équipements utilisateurs sur la première porteuse de composants : des indications de la diminution de puissance de transmission sur la deuxième porteuse de composants et de l'augmentation de puissance de transmission sur la troisième porteuse de composants ; et
au moins une programmation pour le moment où la diminution et l'augmentation de la puissance de transmission sont sur le point de prendre effet.

4. Procédé selon la revendication 3, dans lequel les indications comprennent un décalage de puissance spécifique à une cellule pour chacun du deuxième et du troisième noeud d'accès au réseau, et l'au moins une programmation comprend une programmation de décalage de puissance spécifique à une cellule pour chacun des deuxième et troisième noeuds d'accès au réseau.

5. Procédé selon la revendication 3 ou 4, dans lequel les indications et l'au moins une programmation sont envoyées aux équipements utilisateurs dans une signalisation dédiée sur la première porteuse de composants ou par le biais d'une radiomessagerie sur la première porteuse de composants.

6. Procédé selon l'une quelconque des revendications 3 à 5, le procédé comprenant en outre :
le premier noeud d'accès au réseau à l'aide de la première porteuse de composants permettant de déclencher les équipements utilisateurs pour de nouveaux rapports de mesure des conditions en liaison descendante sur la deuxième porteuse de composants après la diminution de puissance de transmission, et de nouveaux rapports de mesure des conditions en liaison descendante sur la troisième porteuse de composants après l'augmentation de puissance de transmission.

7. Procédé selon l'une quelconque des revendications 3 à 6, dans lequel configurer le deuxième et le troisième noeud d'accès au réseau consiste à :
envoyer au deuxième noeud d'accès au réseau l'indication de diminution de puissance de transmission et la programmation pour le moment où la diminution de puissance de transmission est sur le point de prendre effet ; et envoyer au troisième noeud d'accès au réseau l'indication de l'augmentation de puissance de transmission et la programmation pour le moment où l'augmentation de puissance de transmission est sur le point de prendre effet.

8. Procédé selon la revendication 7, dans lequel la programmation envoyée au deuxième noeud d'accès au réseau est alignée par rapport à une configuration de mesure de ressources radio pour la deuxième porteuse de composants, et la programmation envoyée au troisième noeud d'accès au réseau est alignée par rapport à une configuration de mesure de ressources radio pour la troisième porteuse de composants.

9. Procédé selon la revendication 8, dans lequel la diminution et l'augmentation de puissance de transmission sont sur le point de prendre effet simultanément.

10. Procédé selon l'une quelconque des revendications 7 à 9, dans lequel :
l'indication et la programmation sont envoyées sur une liaison terrestre au cas où l'un ou l'autre, ou les deux, des deuxième et troisième noeuds d'accès au réseau sont des têtes radio distantes ; et/ou
l'indication et la programmation sont envoyées sur une interface X2 au cas où l'un ou l'autre, ou les deux, des deuxième et troisième noeuds d'accès au réseau sont des pico noeuds B électroniques.

11. Appareil permettant de commander un premier noeud d'accès au réseau (22, 24, 26), comprenant au moins un processeur ;
et
une mémoire stockant un ensemble d'instructions informatiques,
dans lequel l'au moins un processeur est disposé avec la mémoire qui stocke les instructions pour amener le premier noeud d'accès au réseau au moins à :
sur la base des rapports de mesure (302) reçus en provenance d'équipements utilisateurs sur une première porteuse de composants des conditions en liaison descendante sur une deuxième porteuse de composants et des conditions en liaison descendante sur une troisième porteuse de composants, configurer (304) un deuxième noeud d'accès au réseau pour diminuer sa puissance de transmission sur la deuxième porteuse de composants et un troisième noeud d'accès au réseau pour augmenter sa puissance de transmission sur la troisième porteuse de composants.

12. Appareil selon la revendication 11, dans lequel :
l'appareil est le premier noeud d'accès au réseau qui est un macro noeud B électronique (22, 24, 26) et la première porteuse de composants est une porteuse de composants primaire PCC ;
le deuxième noeud d'accès au réseau est sous contrôle du macro noeud B électronique (22, 24, 26) et la deuxième porteuse de composants est une porteuse de composants secondaire SCC ; et
le troisième noeud d'accès au réseau est sous contrôle du macro noeud B électronique (22, 24, 26) et la troisième porteuse de composants est une porteuse de composants secondaire SCC différente.

13. Appareil selon la revendication 11 ou 12, dans lequel l'au moins un processeur est disposé avec la mémoire qui stocke les instructions pour amener le premier noeud d'accès au réseau à envoyer en outre aux équipements utilisateurs sur la première porteuse de composants :
des indications de la diminution de puissance de transmission sur la deuxième porteuse de composants et de la diminution de puissance de transmission sur la troisième porteuse de composants ; et
au moins une programmation pour le moment où la diminution et l'augmentation de puissance de transmission sont sur le point de prendre effet.

14. Mémoire lisible par ordinateur stockant un ensemble d'instructions qui, lorsqu'elles sont exécutées sur un premier noeud d'accès au réseau, amènent le premier noeud d'accès au réseau au moins à : sur la base des rapports de mesure reçus d'équipements utilisateurs sur une première porteuse de composants de conditions en liaison descendante sur une deuxième porteuse de composants et de conditions en liaison descendante sur une troisième porteuse de composants, configurer un deuxième noeud d'accès au réseau pour diminuer sa puissance de transmission sur la deuxième porteuse de composants et un troisième noeud d'accès au réseau pour augmenter sa puissance de transmission sur la troisième porteuse de composants.
